# EUROPEAN PATENT APPLICATION

(11) **EP 4 769 712 A1**
(43) Date of publication of application: **01.07.2026**
(21) Application number: 24882905.3
(22) Date of filing: 25.10.2024
(51) Int. Cl.: H01M 50/24, H01M 50/317, H01M 50/291, H01M 50/271, H01M 50/204, H01M 50/249

(54) **BATTERY PACK COMPRISING VALVE AND SUPPORT**

(30) Priority: 27.10.2023 KR 20230145974
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2024/016431
(87) International publication number: WO 2025/089879

(57) **Abstract**

The present invention provides a structure of a battery pack and a method of manufacturing the same wherein the battery pack includes: a battery module; a pack housing defining an inner space where the plurality of battery modules are accommodated; a first valve provided in the pack housing to selectively connect the inside and outside of the pack housing; and a support supporting the pack housing from inside, wherein the pack housing is sealed with the first valve closed so as to prohibit gas from entering thereinto and exiting therefrom.

## Description

### [TECHNICAL FIELD]

This application claims the benefit of priority based on Korean Patent Application No. 10-2023-0145974 filed on October 27, 2023, entire content disclosed in the document of the patent applications is included as a part of this specification.

The present invention relates to a structure of a battery pack and a manufacturing method thereof containing a battery module capable of suppressing corrosion and combustion reactions with excellent structural stability.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Such battery modules or battery packs usually have a metal housing that accommodates the battery. The inner space of the housing inevitably has an empty space filled with air. As a result, oxygen in the air may cause a corrosion reaction that oxidizes the metal housing, which may degrade the strength of the housing and deteriorate the structural chemical stability of the entire battery pack.

Meanwhile, there is a risk that the battery cell or battery module may cause an explosive exothermic reaction due to short circuit, shock or heating. As a result, a large amount of high-temperature gas is generated including flammable gas. When the high-temperature flammable gas is combined with oxygen, heat, fuel and oxygen, i.e. the three elements of the combustion reaction is satisfied, generating a flame. When a flame is generated, thermal runaway may be further accelerated, which may lead to an external fire. In addition, when the pressure inside the pack housing increases due to the generation of explosive gas, there is a possibility that the pack housing itself may explode.

### [DISCLOSURE]

### [TECHNICAL PROBLEM]

In order to solve above-described problems of prior art, it is an object of the present invention to provide a structure of a battery pack and a manufacturing method thereof wherein a combustion reaction caused by thermal runaway is delayed or suppressed.

Specifically, it is an object of the present invention to provide a structure of a battery pack and a manufacturing method thereof capable of delaying or preventing a high-temperature flammable gas from reacting with oxygen.

It is another object of the present invention to provide a structure of a battery pack and a manufacturing method thereof wherein deterioration of structural and chemical stability caused by corrosion of metal parts is prevented.

It is yet another object of the present invention to provide a structure of a battery pack and a manufacturing method thereof wherein deformation of the pack housing caused by insufficient or excessive internal pressure of the pack housing is prevented.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure of a battery pack including: a battery module; a pack housing defining an inner space where the plurality of battery modules are accommodated; a first valve provided in the pack housing to selectively connect the inside and outside of the pack housing; and a support supporting the pack housing from inside, wherein the pack housing is sealed with the first valve closed so as to prohibit gas from entering thereinto and exiting therefrom.

Since the first valve selectively connects the inside and the outside of the sealed pack housing, air may be exhausted from the inner space of the pack housing through the first valve. Accordingly, the oxygen concentration in the pack housing is reduced such that corrosion or combustion reaction inside the pack housing may be delayed or suppressed.

As air is exhausted from the pack housing, the inner space of the pack housing may be temporarily or semi-permanently in a negative pressure state, which may cause the pack housing to deform inwardly. The negative pressure state refers to a state in which the inner pressure is lower than the atmospheric pressure outside the pack housing. The support prevents such deformation by supporting the pack housing from the inside, thereby maintaining the structure of the pack housing, including the sealed structure.

The oxygen concentration of the inner space may be maintained to be lower than 21 percent. Generally, as the oxygen concentration in the atmosphere is about 21 percent. When the oxygen concentration is less than 21 percent, the corrosion reaction of the metal may be suppressed compared to when exposed to the atmosphere.

Preferably, the oxygen concentration of the inner space may be maintained to be equal to or lower than 5 percent. The term "flammable gas" generally refers to a gas that has a strong tendency to combust by heat at an oxygen concentration of 5 percent or more. The possibility of the flammable gas igniting is significantly reduced when the oxygen concentration of the inner space is of 5 percent or lower.

Ideally, the oxygen concentration of the inner space may be 0 percent. That is, the inner space may be in a vacuum state or filled with a non-flammable and/or flammable gas.

The inner space may be filled with a non-flammable gas. As the inner space is filled with a non-flammable gas, the oxygen concentration of the inner space may be maintained at a low level, while deformation due to the atmospheric pressure may be minimized.

The non-flammable gas may be selected from the group consisting of carbon dioxide, nitrogen, helium, neon, argon and combinations thereof. However, any gas may be selected as a non-flammable gas as long as the selected gas is not a flammable gas or an oxidizing gas.

A plurality of battery modules may be provided. Here, the pack housing may include one or more partition walls that divide the space in which the battery modules are accommodated.

The support may be disposed between one end of the partition wall and the inner surface of the pack housing to support the pack housing. Specifically, the support may extend between one end surface of the partition wall and one inner surface of the pack housing such that the one axial end and the other axial end may be in contact with one end surface of the partition wall and one inner surface of the pack housing, respectively.

According to an embodiment of the present invention, the pack housing may include a pack frame having an open upper portion and a top plate covering the upper portion of the pack frame. Here, the portion that is most easily deformed as the inner space of the pack housing is in a negative pressure state may be the top plate.

In such case, the partition wall may extend upward from the bottom surface of the pack frame, and the support may be provided between the upper end portion of the partition wall and the bottom surface of the top plate to support the top plate.

The support may be a spacer having a hollow portion, and may be mounted with a fastening member connecting the top plate and the partition wall. Here, the fastening member may have one end connected to the partition wall, the other end connected to the top plate, and an extending portion between the one end and the other end may pass through the hollow portion.

The support may be installed at a predetermined distance from the joint between the top plate and the pack frame. The top plate may be supported by the pack frame at the joint so as to suppress the deformation thereof, and it is preferable that the support supports the top plate at a position spaced from the joint.

The top plate may be deformed more significantly when farther from the joint and closer to the center of the plane of the top plate. At least one support may be disposed in a manner that the distance to the center of the top plate is equal to or less than the distance to the edge of the top plate. The edge may refer to the inner periphery or outer periphery of the joint of the top plate and the pack frame.

The battery module includes a battery cell and a module housing that accommodates the battery cell, and a venting hole may be provided in the module housing to connect the inner spaces of the module housing and the pack housing. That is, the inner space of the module housing may be connected to the inner space of the pack housing. Accordingly, when air is exhausted from the inside of the pack housing, the oxygen concentration inside the module housing may also be reduced.

A second valve may be provided in the pack housing. The second valve may be a check valve that allows gas to flow out of the inner space while not allowing gas to flow into the inner space. That is, the second valve may be a valve that opens when the internal pressure of the pack housing is higher than the external pressure, and closes when the internal pressure of the pack housing is lower than the external pressure. When air in the inner space of the pack housing is exhausted through the second valve, air may be easily prevented from flowing back into the inner space. In addition, when the pressure of the inner space increases due to heat or gas generated in the inner space, the second valve may discharge the gas without introducing oxygen into the inner space, thereby reducing the inner pressure of the pack housing.

The present invention also provides a structure of a vehicle including the battery pack. The battery pack may be built into the vehicle as a power source. The vehicle may be an electric vehicle or a hybrid vehicle. The vehicle may be a two-wheeled vehicle or a four-wheeled vehicle. However, the structure of the vehicle is not limited thereto, and the battery pack does not necessarily have to serve as a power source of the vehicle.

The present invention also provides a method of manufacturing a battery pack.

A method of manufacturing a battery pack according to an embodiment of the present invention may include: a step of sealing the pack housing so as to prohibit gas from passing through; and a step of exhausting air from the inner space.

The sealing step of the pack housing may be performed in any manner known to a person skilled in the art, such as welding the pack frame and the top plate, or coupling the pack frame and the top plate with a sealing gasket therebetween.

The exhaust of air from the inner space may be performed through the first valve. Alternatively, when the pack housing is provided with the second valve, the exhaust of air may be performed through the second valve.

The step of injecting a non-flammable gas into the inner space may be further included. The injection of the non-flammable gas may be performed through the first valve.

### [ADVANTAGEOUS EFFECTS]

The present invention provides a structure of a battery pack and a manufacturing method thereof wherein a valve for exhausting air from the inside of the pack housing is provided in order to reduce the internal oxygen concentration of the pack housing and delay or prevent a combustion reaction of a high-temperature flammable gas with oxygen.

The present invention also provides a structure of a battery pack and a manufacturing method thereof wherein degradation of structural and chemical stability due to corrosion of metal parts is prevented by maintaining a low internal oxygen concentration.

The present invention is also advantageous in that a structure of a battery pack having a support capable of preventing deformation of the pack housing in response to a temporary or semi-permanent decrease in internal pressure of the pack housing due to lack of air inside the pack housing may be provided.

The present invention is also advantageous in that a structure of a battery pack and a manufacturing method thereof may be provided wherein structural deformation due to insufficient pressure inside the pack housing is prevented while preventing a corrosion and/or suppressing combustion reaction by injecting a non-flammable gas into the pack housing with air exhausted therefrom.

The present invention also provides a structure of a battery pack and a manufacturing method thereof wherein a check valve capable of preventing deformation or explosion of the pack housing due to excessive internal pressure of the pack housing without introducing oxygen into the pack housing may be provided.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate an appearance and an internal structure of a battery pack, respectively, according to an embodiment of the present invention.
FIGS. 3 and 4 illustrate a cross-section along a first valve of a battery pack according to an embodiment of the present invention.
FIGS. 5 and 6 illustrate a cross-section along venting holes of a battery pack according to an embodiment of the present invention.
FIG. 7 illustrates the arrangement of supports according to an embodiment of the present invention.
FIGS. 8 and 9 illustrate a cross-section along supports and fastening members of a battery pack according to an embodiment of the present invention.
FIG. 10 illustrates a plan view of an arrangement of supports according to an embodiment of the present invention.
FIG. 11 illustrates an appearance of a battery pack according to another embodiment of the present invention.
FIG. 12 illustrates a cross-section of a second valve according to another embodiment of the present invention.
FIG. 13 illustrates a vehicle containing a battery pack according to an embodiment of the present invention.
FIG. 14 is a flow chart illustrating a method of manufacturing a battery pack according to an embodiment of the present invention.
FIG. 15 is a schematic diagram illustrating an air exhaust step of a method of manufacturing a battery pack according to an embodiment of the present invention.
FIG. 16 is a flow chart illustrating a method of manufacturing a battery pack according to another embodiment of the present invention.
FIGS. 17 and 18 are schematic diagrams illustrating an air exhaust step of a method of manufacturing a battery pack according to another embodiment of the present invention.
FIG. 19 is a schematic diagram illustrating a non-flammable gas injection step of a method of manufacturing a battery pack according to another embodiment of the present invention.

### [DESCRIPTION OF REFERENCE NUMERALS]

- 1:: pack housing
10: inner space
11: pack frame
111: first valve
112: second valve
12: top plate
13: partition wall
131: support
132: fastening member
- 2:: battery module
20: module housing
200: venting hole
21: battery cell
22: bus bar
- D1:: distance to the center
- D2:: distance to the edge
- P:: battery pack
- V:: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

### [GENERAL STRUCTURE OF A BATTERY PACK]

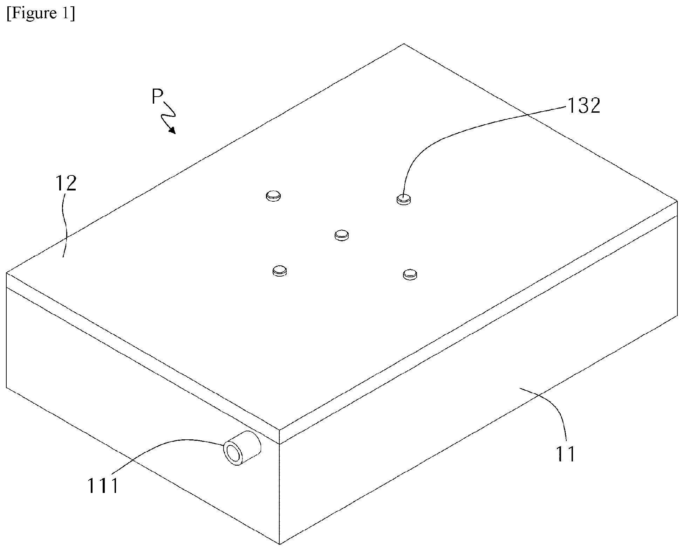

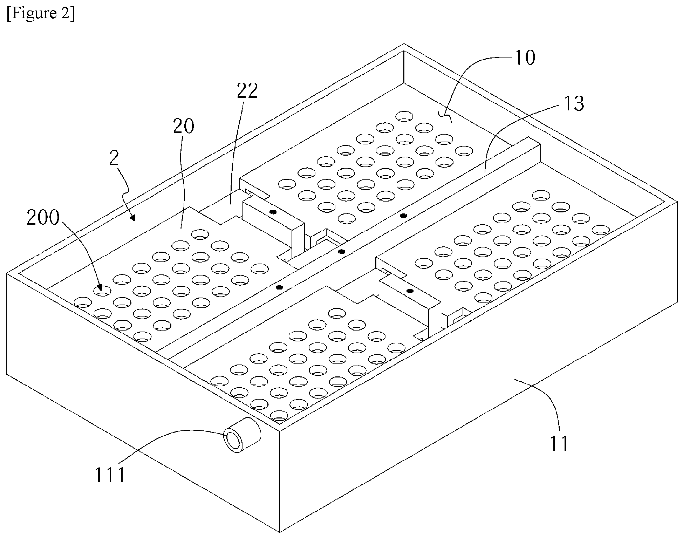

Hereinafter, with reference to FIGS. 1 and 2, a general structure of a battery pack according to an embodiment of the present invention will be described.

FIGS. 1 and 2 illustrate an appearance and an internal structure of a battery pack, respectively, according to an embodiment of the present invention. Referring to FIGS. 1 and 2, a battery pack according to an embodiment of the present invention may include a battery module 2 and a pack housing 1 defining an inner space 10 in which the battery module 2 is accommodated.

The pack housing 1 may be optionally at least sealed so as to prohibit gas from entering thereinto and exiting therefrom.

The pack housing 1 according to an embodiment of the present invention may include a pack frame 11 having an open upper portion and a top plate 12 covering the upper portion of the pack frame. In such case, the pack housing 1 may be sealed by bonding the top plate 12 and the pack frame 11 to each other. The sealing may be achieved in various methods such as a bonding including welding and fastening a sealing gasket interposed therebetween.

The battery module 2 may include one or more battery cells 21. Alternatively, the battery module 2 itself may be a single battery cell 21.

A plurality of battery modules 2 electrically connected to one another may be provided. A battery pack P may include a bus bar 22 for electrically connecting the battery modules 2 to one another.

In the case where a plurality of battery modules 2 is provided in multiple numbers, the pack housing 1 may include a partition wall 13 that divides the space in which the battery modules 2 are accommodated.

According to an embodiment of the present invention, the partition wall 13 may extend in upward direction from the bottom surface of the pack frame 11.

### [SELECTIVE AIR COMMUNICATION STRUCTURE BETWEEN INSIDE AND OUTSIDE OF PACK THROUGH FIRST VALVE]

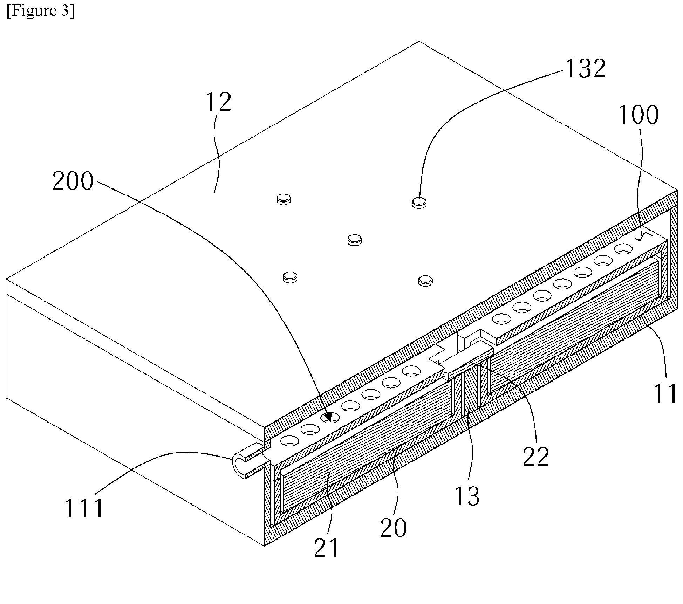

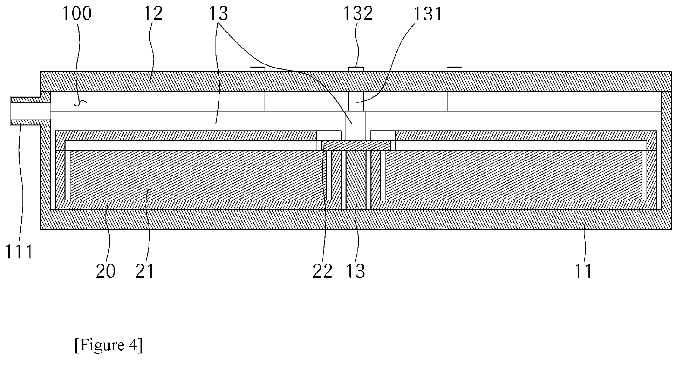

Hereinafter, with reference to FIGS. 3 and 4, the structure for selective air communication between the inside and outside of the pack through the first valve according to an embodiment of the present invention and effects thereof will be described in detail.

FIGS. 3 and 4 illustrate a cross-section along a first valve of a battery pack according to an embodiment of the present invention. Referring to FIGS. 3 and 4, the pack housing 1 may be provided with a first valve 111.

The first valve 111 may be opened and closed selectively. Accordingly, the first valve 111 may selectively connect the inside to the outside of the pack housing 1. That is, depending on the opening and closing of the first valve 111, the inflow and outflow of gas between the inside and the outside of the pack housing 1 may be enabled or disabled.

According to an embodiment of the present invention, air inside the pack housing 1 may be exhausted through the first valve 111. After the air is exhausted from the inner space 10 of the pack housing 1, the first valve 111 is closed, thereby maintaining the oxygen concentration of the inner space 10 at or below a predetermined level.

Specifically, the oxygen concentration of the inner space 10 may be maintained to be lower than 21 percent. Generally, as the oxygen concentration in the atmosphere is about 21 percent, by maintaining the oxygen concentration of the inner space 10 to be lower than 21 percent, the corrosion of the metal parts constituting the battery pack P and/or the combustion reaction caused by thermal runaway inside the pack housing 1 may be delayed or prevented compared to the case where the combustion reaction is exposed to the atmosphere.

Preferably, the oxygen concentration of the inner space 10 may be maintained to be equal to or lower than 5 percent. Since the term "flammable gas" generally refers to a gas that has a strong tendency to combust at an oxygen concentration of 5 percent or more, the combustion reaction of the flammable gas in the pack housing 1 may be significantly suppressed at the oxygen concentration of the inner space 10 of 5 percent or lower.

Ideally, the oxygen concentration of the inner space 10 may be 0 percent. That is, the inner space 10 may be maintained in a vacuum state or filled with a non-flammable and/or flammable gas. When oxygen does not exist in the inner space 10, corrosion or combustion reaction due to oxygen may be completely prevented.

According to another embodiment of the present invention, the inner space 10 may be filled with a non-flammable gas. As the inner space 10 is filled with a non-flammable gas, the oxygen concentration of the inner space 10 may be maintained at a low level, while deformation due to the difference in internal and external pressure of the pack housing 1 may be minimized.

The non-flammable gas may be selected from the group consisting of carbon dioxide, nitrogen, helium, neon, argon and combinations thereof. However, any gas may be selected as a non-flammable gas as long as the selected gas is not a flammable gas or an oxidizing gas in the general sense. For example, according to an embodiment of the present invention, the non-flammable gas may be nitrogen gas.

### [STRUCTURE FOR COMMUNICATION BETWEEN INSIDE AND OUTSIDE OF MODULE THROUGH VENTING HOLE]

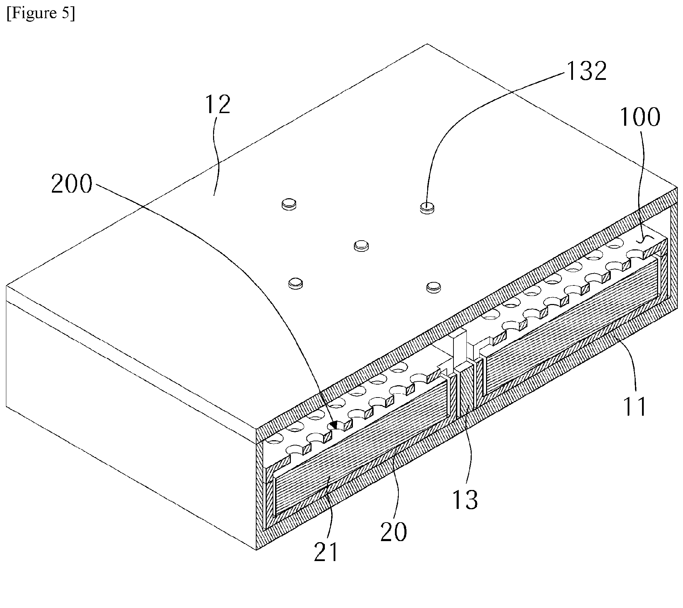

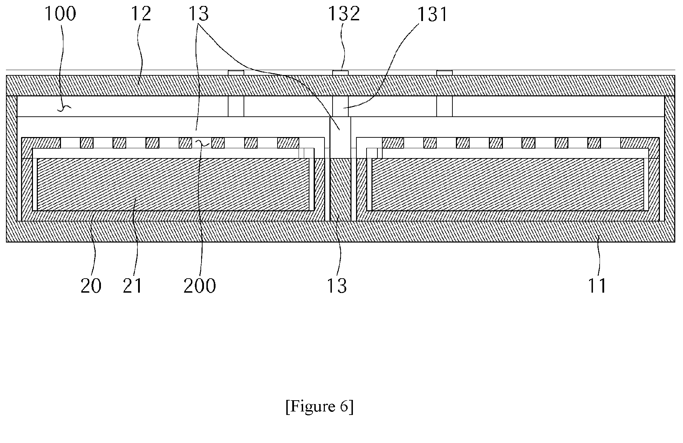

Hereinafter, with reference to FIGS. 5 and 6, structure for air communication between inside and outside of module through venting hole according to an embodiment of the present invention and effect thereof will be described in detail.

FIGS. 5 and 6 illustrate a cross-section along venting holes of a battery pack according to an embodiment of the present invention. Referring to FIGS. 5 and 6, the battery module 2 according to an embodiment of the present invention may include one or more battery cells 21 and a module housing 20 accommodating the one or more battery cells 21.

The module housing 20 may include a venting hole 200 that connects the inner space of the module housing 20 and the inner space 10 of the pack housing 1. One or more venting holes 200 may be provided.

Due to the venting hole 200, when air is exhausted from the inside of the pack housing 1, air may also be exhausted from the inside of the module housing 20, and when non-flammable gas is injected into the pack housing 1, non-flammable gas may also be injected into the module housing 20. In addition, when gas is generated from the battery cell 21, the gas may be discharged into the inner space 10 of the pack housing 1 through the venting hole 200.

### [STRUCTURE AND ARRANGEMENT OF SUPPORT]

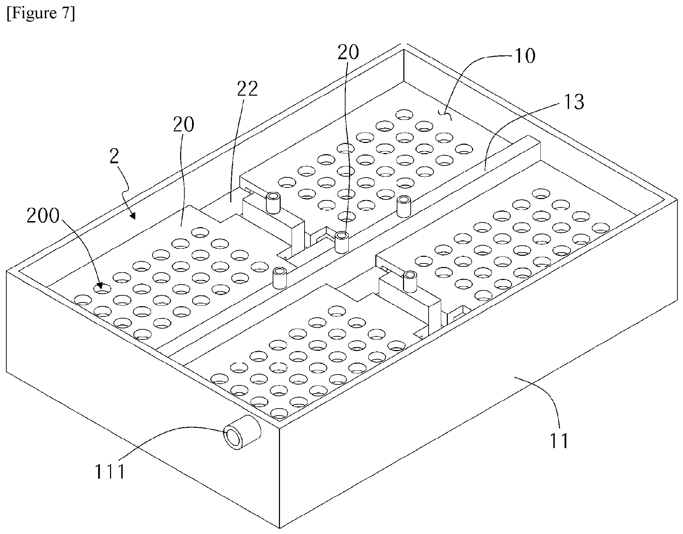

Hereinafter, with reference to FIGS. 7 to 10, structure, arrangement, and effects thereof of a support according to an embodiment of the present invention will be described in detail.

FIG. 7 illustrates the arrangement of supports according to an embodiment of the present invention. Referring to FIG. 7, a battery pack P according to an embodiment of the present invention may include a support 131 that supports the pack housing 1 from the inside. One or more supports 131 may be provided.

As the support 131 is provided, the pack housing 1 may be prevented from being deformed due to the pressure difference between the inside and the outside while the air is exhausted from the inside of the pack housing 1.

According to an embodiment of the present invention, the deformation due to the pressure difference between the inside and the outside of the pack housing 1 may most significantly occur in the top plate 12.

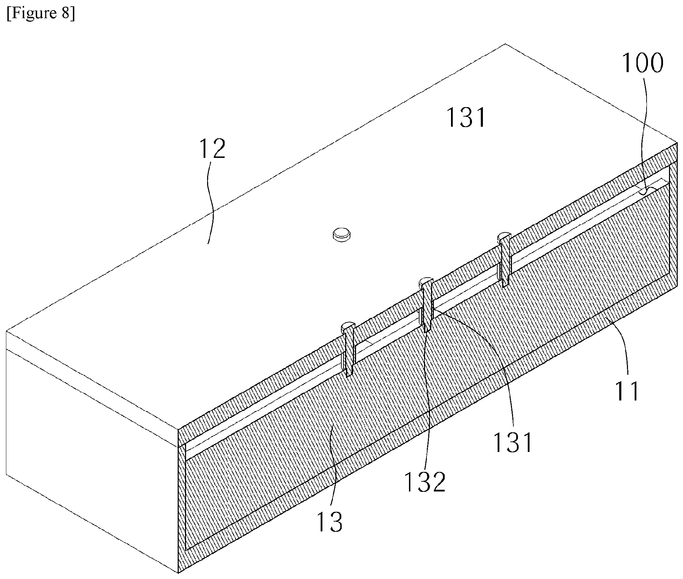

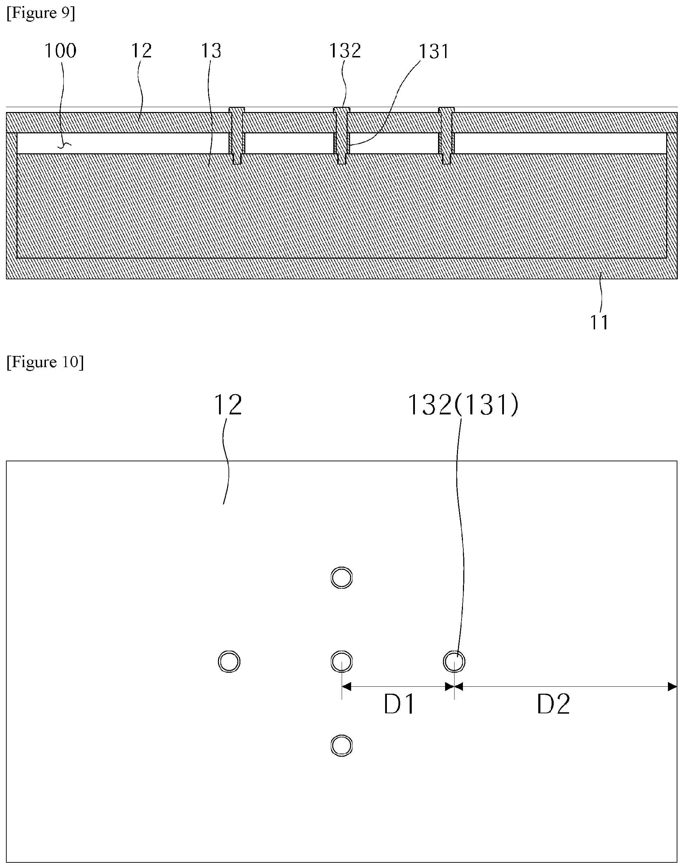

FIGS. 8 and 9 illustrate a cross-section along supports and fastening members of a battery pack according to an embodiment of the present invention. Referring to FIGS. 8 and 9, the support 131 may be disposed and connect the upper end portion of the partition wall 13 and the top plate 12 to support the top plate 12. Specifically, the support 131 may extend such that one end thereof is in contact with the upper end portion of the partition wall 13 and the other end thereof is in contact with the bottom surface of the top plate 12. Accordingly, the top plate 12 may be prevented from being deformed inwardly due to the pressure difference between the inside and the outside of the pack housing 1.

Specifically, the support 131 may be a spacer having a hollow portion. Here, the support 131 may be fixed by a fastening member 132 that passes through the hollow portion and connects the top plate 12 and the partition wall 13.

According to an embodiment of the present invention, the fastening member 132 and the support 131 limit the upward displacement and downward displacement of the top plate 12, respectively, such that deformation of the top plate 12 may be prevented in both cases where the internal pressure of the pack housing 1 is greater than or less than the outside.

FIG. 10 illustrates a plan view of an arrangement of supports according to an embodiment of the present invention. Referring to FIG. 10, the support 131 and/or the fastening member 132 may be disposed at a predetermined distance from the joint of the top plate 12 and the pack frame 11. The joint refers to a portion where the top plate 12 and the pack frame 11 are in contact with and fixed to each other, and may correspond to the periphery of the top plate 12.

It is preferable that the support 131 be arranged away from the top plate 12 since the joint is supported by the pack frame 11 and the displacement thereof is relatively small in case of vertical deformation of the top plate 12.

The top plate may be deformed more significantly when farther from the joint and closer to the center of the plane of the top plate. According to an embodiment of the present invention, at least one support 131 may be disposed in a manner that the distance D1 to the center of the top plate 12 is equal to or less than the distance D2 to the edge of the top plate 12. The edge may refer to the inner periphery or outer periphery of the joint of the top plate 12 and the pack frame 11.

In summary, according to the present embodiment, the pack housing 1 may suppress corrosion and/or combustion reactions by exhausting air through the first valve 111, prevent deformation due to the contraction with the help of the support 131, and prevent deformation due to expansion with the help of the fastening member 132.

### [MODIFIED EXAMPLE - STRUCTURE OF BATTERY PACK INCLUDING SECOND VALVE]

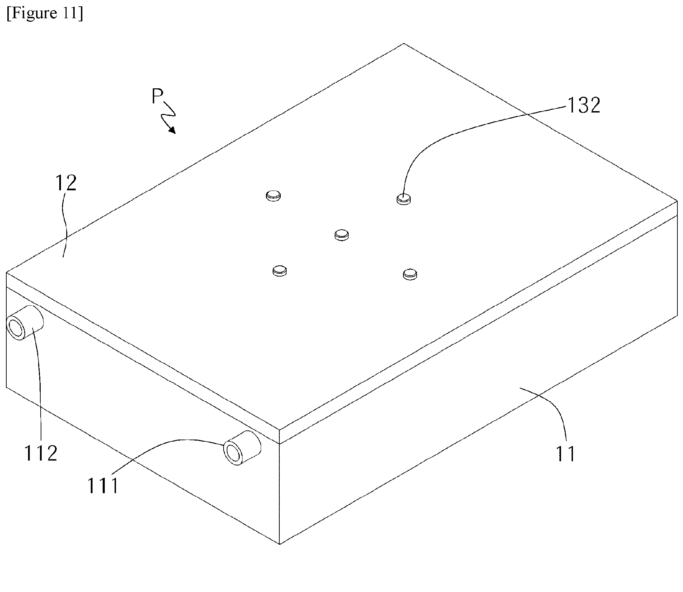

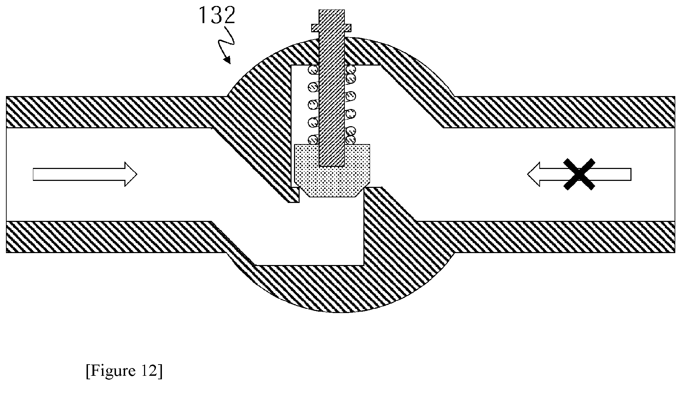

Hereinafter, with reference to FIGS. 11 and 12, a structure of a battery pack according to another embodiment of the present invention will be described in detail.

FIG. 11 illustrates an appearance of a battery pack according to another embodiment of the present invention. Referring to FIG. 11, a battery pack P according to another embodiment of the present invention may include a second valve 112.

FIG. 12 illustrates a cross-section of a second valve according to another embodiment of the present invention. The second valve 112 may be a check valve. That is, the second valve 112 may be a one-way valve that allows gas to flow out of the pack housing 1 to the outside while not allowing gas to flow into the pack housing 1. Specifically, the second valve 112 may be a valve that opens when the internal pressure of the pack housing 1 is higher than the external pressure, and closes when the internal pressure of the pack housing 1 is lower than the external pressure.

By providing the second valve 112, exhaust of air from the pack housing 1 is facilitated. In addition, when the second valve 112 is provided, gas may be discharged through the second valve 112 during normal times or during thermal runaway such that deformation or explosion due to a sudden increase in the internal pressure of the pack housing 1 may be prevented.

According to the embodiment, the pack housing 1 may be prevented from deformation due to shrinkage with help of the support 131 and/or the non-flammable gas filled in the inner space 10 of the pack, and may be prevented from deformation due to expansion with the help of the fastening member 132 and/or the second valve 112.

### [VEHICLE INCLUDING BATTERY PACK]

The present invention also provides a structure of a vehicle including the battery pack P.

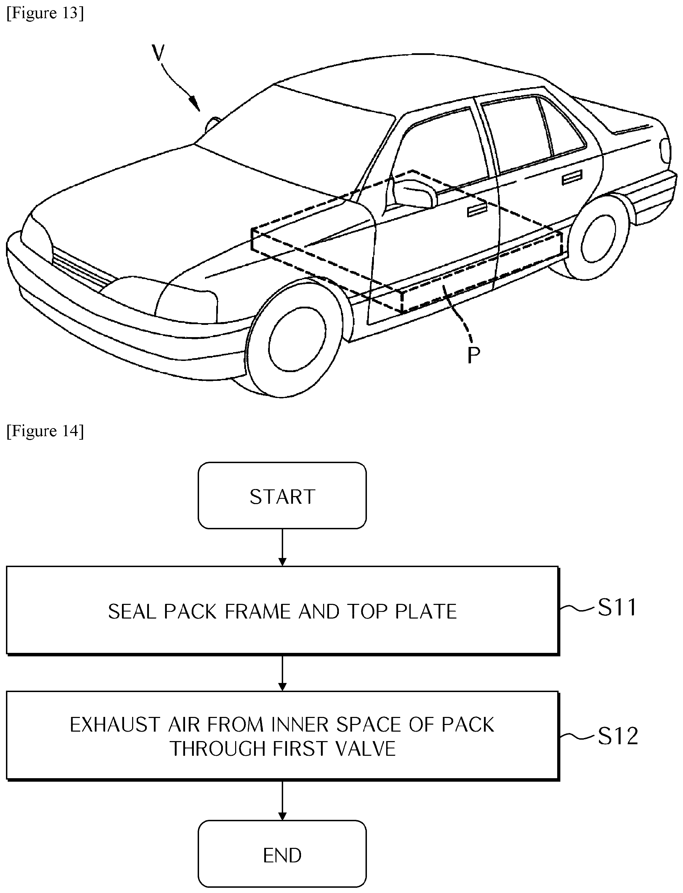

Hereinafter, with reference to FIG. 13, a structure of a vehicle including a battery pack according to an embodiment of the present invention will be described.

FIG. 13 illustrates a vehicle containing a battery pack according to an embodiment of the present invention. Referring to FIG. 13, a battery pack P may be built into a vehicle V as a power source. The vehicle V may be a hybrid vehicle or an electric vehicle, but is not limited thereto. In addition, the vehicle V may be a two-wheeled vehicle or a four-wheeled vehicle, but is not limited thereto.

### [METHOD OF MANUFACTURING BATTERY PACK]

Hereinafter, with reference to FIGS. 14 to 19, a method of manufacturing a battery pack according to an embodiment of the present invention and other embodiments will be described in detail.

FIG. 14 is a flow chart illustrating a method of manufacturing a battery pack according to an embodiment of the present invention. Referring to FIG. 14, a method of manufacturing a battery pack according to an embodiment of the present invention may include a sealing step S11 of sealing a pack housing to prohibit gas from entering thereinto and exiting therefrom; and an air exhaust step S12 of exhausting air from the inner space of the pack housing.

The sealing step S11 may be performed by bonding the pack frame 11 and the top plate 12 for sealing. The sealing may be achieved by, for example, welding or other methods with a gasket interposed therebetween. The sealing of the pack housing 1 does not necessarily mean that gas is restricted from entering or exiting through a valve that may be opened and closed automatically and/or manually. For example, despite the sealing, air may enter into and exit from the pack housing 1 through opening the first valve 111.

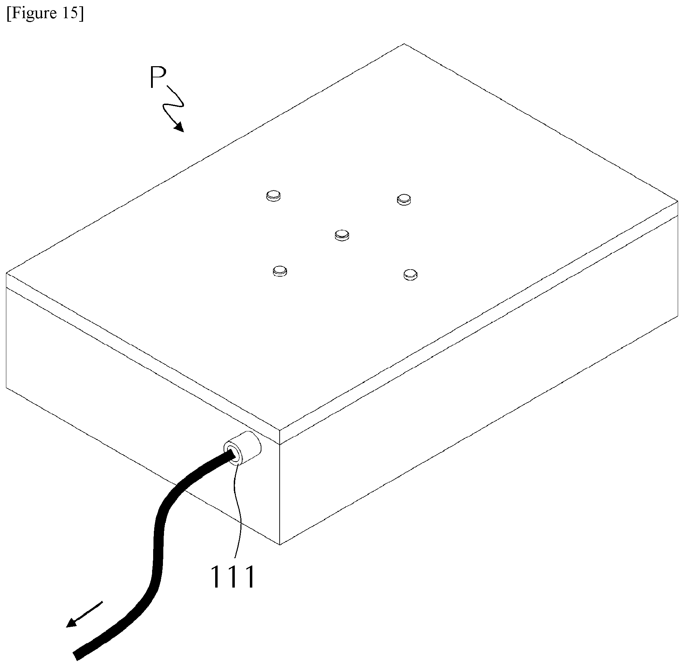

FIG. 15 is a schematic diagram illustrating an air exhaust step of a method of manufacturing a battery pack according to an embodiment of the present invention. Referring to FIG. 15, the air exhaust step S12 may be performed by sucking and removing air from the inner space 10 through the first valve 111. However, the air exhaust step S12 does not necessarily have to be performed in such manner, and may be performed in another manner, such as by injecting an oxygen remover before sealing the pack housing 1.

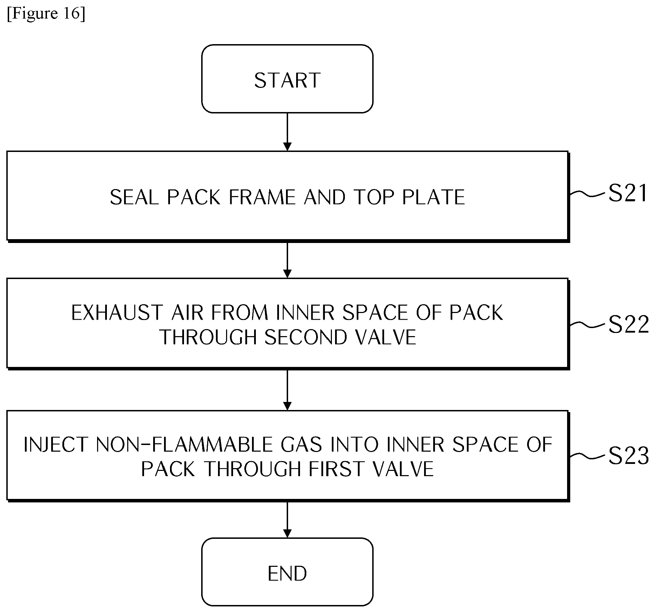

FIG. 16 is a flow chart illustrating a method of manufacturing a battery pack according to another embodiment of the present invention. Referring to FIG. 16, the method of manufacturing a battery pack according to another embodiment of the present invention includes a sealing step S21 of sealing the pack housing such that gas is prohibited from entering thereinto and exiting therefrom; an air exhaust step S22 of exhausting air from the inner space of the pack housing; and a gas injection step S23 for injecting a non-flammable gas into the inner space of the pack housing.

The sealing step S11 may be performed by bonding the pack frame 11 and the top plate 12 for sealing. The sealing may be achieved by, for example, welding or other methods with a gasket interposed therebetween. The sealing of the pack housing 1 does not necessarily mean that gas is restricted from entering or exiting through a valve that may be opened and closed automatically and/or manually. For example, despite the sealing, air may enter into and exit from the pack housing 1 through the second valve 112 and/or through opening the first valve 111.

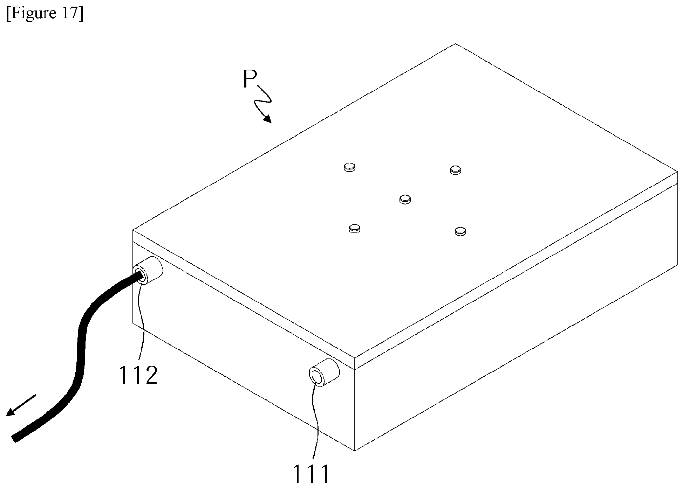

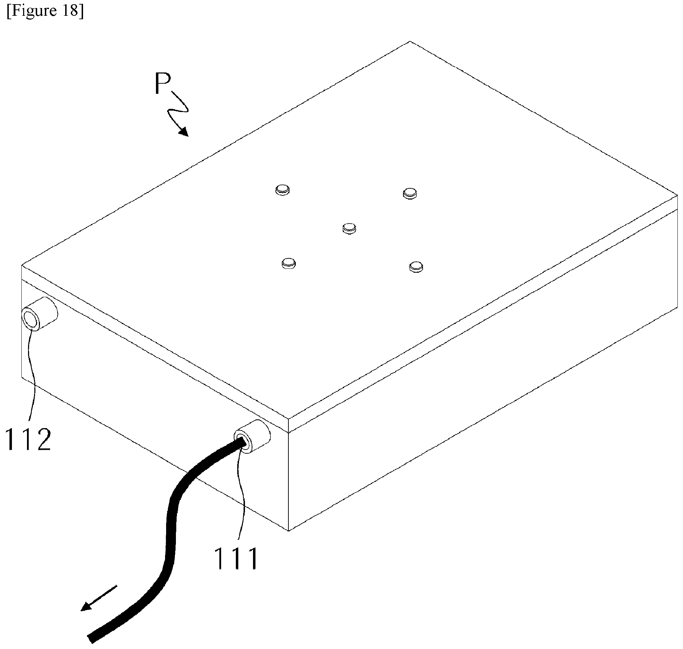

FIGS. 17 and 18 are schematic diagrams illustrating an air exhaust step of a method of manufacturing a battery pack according to another embodiment of the present invention.

As shown in FIG. 17, the air exhaust step S22 may be performed by sucking and exhausting air from the inner space 10 through the second valve 112.

Alternatively, as shown in FIG. 18, the air exhaust step S22 may be performed by sucking and exhausting air from the inner space 10 through the first valve 111.

However, the air exhaust step S22 does not necessarily have to be performed in such manner, and may be performed in another manner, such as by injecting an oxygen remover before sealing the pack housing 1.

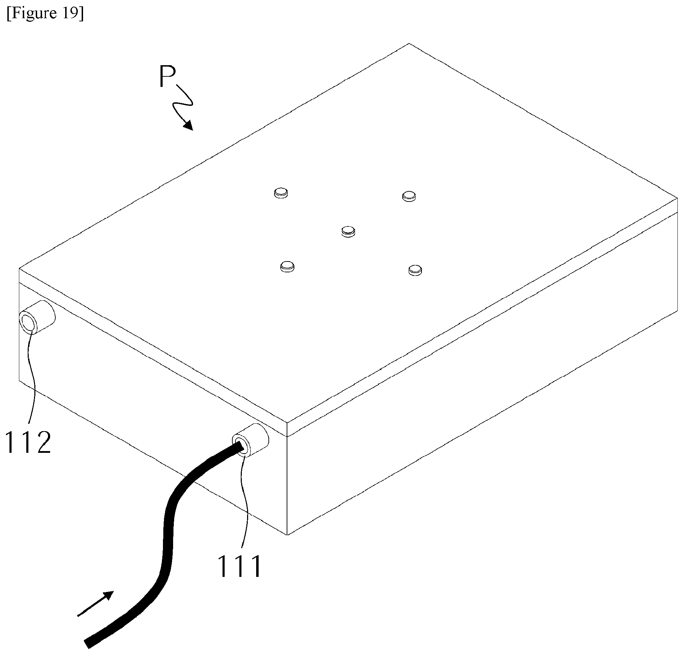

FIG. 19 is a schematic diagram illustrating a non-flammable gas injection step of a method of manufacturing a battery pack according to another embodiment of the present invention. Referring to FIG. 19, the gas injection step S23 may be performed by injecting non-flammable gas into the inner space 10 through the first valve 111.

The non-flammable gas may be selected from the group consisting of carbon dioxide, nitrogen, helium, neon, argon and combinations thereof. However, any gas may be selected as a non-flammable gas as long as the selected gas is not a flammable gas or an oxidizing gas in the general sense. For example, according to an embodiment of the present invention, the non-flammable gas may be nitrogen gas.

For example, the air exhaust step S22 may be performed simultaneously with the gas injection step S23. Specifically, as the non-flammable gas is injected through the first valve 111, the internal pressure of the pack housing 1 increases, and a mixture of the non-flammable gas and the air within the pack housing 1 is discharged through the second valve 112, thereby reducing the internal oxygen concentration of the pack housing 1.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack comprising:
a plurality of battery modules;
a pack housing defining an inner space where the plurality of battery modules are accommodated;
a first valve provided in the pack housing to selectively connect the inside and outside of the pack housing; and
a support supporting the pack housing from inside,
wherein the pack housing is sealed with the first valve closed so as to prohibit gas from entering thereinto and exiting therefrom,
the pack housing comprises one or more partition walls dividing the inner space where the plurality of battery modules are accommodated, and
the support is disposed between one end of the partition wall and an inner surface of the pack housing to support the pack housing.

2. The battery pack of claim 1, wherein the oxygen concentration of the inner space is maintained to be lower than 21 percent.

3. The battery pack of claim 2, wherein the oxygen concentration of the inner space is maintained to be equal to or lower than 5 percent.

4. The battery pack of claim 3, wherein the oxygen concentration of the inner space is maintained at 0 percent.

5. The battery pack of claim 1, wherein the inner space is filled with a non-flammable gas.

6. The battery pack of claim 5, wherein the non-flammable gas is selected from a group consisting of carbon dioxide, nitrogen, helium, neon, argon and combinations thereof.

7. The battery pack of claim 1, wherein the pack housing comprises a pack frame having an open upper portion and a top plate covering the upper portion of the pack frame,
the partition wall extends upward from a bottom surface of the pack frame, and
the support is disposed between an upper end portion of the partition wall and a bottom surface of the top plate to support the top plate.

8. The battery pack of claim 7, wherein the support comprises a spacer having a hollow portion and is mounted with a fastening member connecting the top plate and the partition wall.

9. The battery pack of claim 7, wherein the support is installed at a predetermined distance from a joint between the top plate and the pack frame.

10. The battery pack of claim 9, wherein a distance between the support and a center of the top plate is equal to or less than a distance between the support and an edge of the top plate.

11. The battery pack of claim 1, wherein each of the plurality of battery modules includes a battery cell and a module housing accommodating the battery cell, and
a venting hole is provided in the module housing to connect an inner space of the module housing and the inner space of the pack housing.

12. The battery pack of claim 1, further comprising a second valve provided in the pack housing, the second valve comprising a check valve allowing gas to flow out of the inner space and prohibiting gas from flowing into the inner space.

13. A vehicle including a battery pack of any one of claims 1 to 12.

14. A method of manufacturing a battery pack of claim 1, the method comprising:
sealing a pack housing to prohibit gas from passing through; and
exhausting air from an inner space of the pack housing.

15. The method of claim 14, further comprising: injecting a non-flammable gas into the inner space.

16. The method of claim 15, wherein the non-flammable gas is selected from a group consisting of carbon dioxide, nitrogen, helium, neon, argon and combinations thereof.

17. The method of claim 14, wherein the air is exhausted through a first valve.

18. The method of claim 15, wherein the battery pack further comprises a second valve provided in the pack housing, the second valve comprising a check valve allowing gas to flow out of the inner space and prohibiting gas from flowing into the inner space.
the air is exhausted through the second valve, and
the non-flammable gas injected through a first valve.
